**Europäisches Patentamt**

**European Patent Office**

**Office européen des brevets**

(11) Veröffentlichungsnummer: **0 219 689**
**B1**

(12) **EUROPÄISCHE PATENTSCHRIFT**

(45) Veröffentlichungstag der Patentschrift: **11.04.90**

(21) Anmeldenummer: **86112811.4**

(22) Anmeldetag: **17.09.86**

(51) Int. Cl.⁵: **F 16 J 15/56,** F 16 J 15/02, F 16 J 15/16

(54) Dichtungsvorrichtung.

(30) Priorität: **21.09.85 DE 3533797**

(43) Veröffentlichungstag der Anmeldung:
**29.04.87 Patentblatt 87/18**

(45) Bekanntmachung des Hinweises auf die Patenterteilung:
**11.04.90 Patentblatt 90/15**

(84) Benannte Vertragsstaaten:
**AT BE CH FR GB IT LI LU NL SE**

(56) Entgegenhaltungen:
**DE-A-2 911 156**
**DE-B-2 845 920**
**US-A-4 067 584**
**US-A-4 089 534**

(73) Patentinhaber: **Hunger, Walter**
**Otto-Nagler-Strasse 13**
**D-8700 Würzburg (DE)**

(72) Erfinder: **Hunger, Walter**
**Otto-Nagler-Strasse 13**
**D-8700 Würzburg (DE)**

(74) Vertreter: **Nix, Frank Arnold, Dr.**
**Kröckelbergstrasse 15**
**D-6200 Wiesbaden (DE)**

Courier Press, Leamington Spa, England.

EP 0 219 689 B1

**Beschreibung**

Die vorliegende Erfindung bezieht sich auf eine Dichtungsvorrichtung nach dem Oberbegriff des Patentanspruchs 1. Eine solche Dichtungsvorrichtung ist aus der DE—PS 24 30 573 bekannt.

Bei dieser bekannten Dichtungsvorrichtung ist die axiale Erstreckung des Spreizrings wesentlich größer als die des Dichtungsrings, und dieser umfaßt nur einen mittleren Abschnitt des Spreizrings, während über dessen Randabschnitten jeweils ein Abschnitt der Führungsringe liegt.

Die Führungsringe sind zur Ermöglichung ihrer Montage an einer Umfangsstelle geschlitzt, und bei einer Druckbeaufschlagung des Spreizrings weiten sie sich auf, wobei sich ihre Schlitzränder voneinander entfernen. In diesen etwas geöffneten Schlitz kann dann der ebenfalls unter Druck stehende Werkstoff des Dichtungsrings hineingedrückt werden. Bei einer nachfolgenden Druckentlastung kann dann der in den Schlitzspalt eingedrungene Dichtungsringwerkstoff abgequetscht werden, was zu einer langsam fortschreitenden Zerstörung der Stirnfläche des Dichtungsrings führt.

Aufgabe der Erfindung ist Verbesserung der betrachteten Dichtungsvorrichtung in der Weise, daß die Gefahr der Zerstörung des Dichtungsrings beseitigt und somit die Lebensdauer der Dichtungsvorrichtung erhöht ist.

Die Lösung der gestellten Aufgabe gelingt erfindungsgemäß durch die im kennzeichnenden Teil des Patentanspruchs 1 genannten Merkmale. Bei dieser erfindungsgemäßen Ausbildung beaufschlagt der Druckmitteldruck die Führungsringe und Stützringe allseitig, so daß diese keine Aufweitung erfahren, sondern die Aufweitung auf den Dichtungsring beschränkt bleibt. Da sich die Schlitzspalte der Stützringe beim Zylinderatmen nicht öffnen, wird dem Werkstoff des Dichtungsrings auch keine Möglichkeit geboten, in sich an seinen Stirnflächen öffnende Spalte einzudringen und anschließend abgequetscht zu werden.

Die Erfindung wird nachfolgend durch die Beschreibung eines Ausführungsbeispiels anhand der beigegebenen Zeichnung weiter erläutert. Diese zeigt die Teilansicht eines Kolbens in einem Arbeitszylinder, teilweise geschnitten.

Der Kolben 1 sitzt in einem Arbeitszylinder 2 und ist diesem gegenüber durch eine Dichtungsvorrichtung abgedichtet, welche in einer in der Mantelfläche des Kolbens ausgearbeiteten Nut 3 untergebracht ist. Die Dichtungsvorrichtung besteht aus dem mittig sitzenden, die eigentliche Abdichtung bewirkenden Dichtungsring 4, der einen ebenfalls mittig sitzenden Spreizring 5 umgibt, dessen axiale Erstreckung der des Dichtungsrings 4 entspricht.

Beidseits der Gruppe aus Dichtungs- und Spreizring ist in der Kolbennut 3 je ein geschlitzter Stützring 6 angeordnet, der der Dichtungsring-Spreizring-Gruppe eine ebene Stirnfläche zuwendet. In der von der Mittenebene abgewandten Stirnfläche jedes Stützrings 6 ist ein Absatz 7 vorgesehen.

Die bisher beschriebenen Elemente werden in axialer Position gehalten durch beidseits angeordnete Führungsringe 8, die im Querschnitt ein nach innen offenes U-Profil aufweisen, mittels dessen sie auf jeweils einem Bund 9 der Kolbenmantelfläche unverschieblich sitzen. Dabei liegt der zur Mittenebene hin gelegene Schenkel jedes Führungsrings 8 in dem Absatz 7 des zugehörigen Stützrings 6.

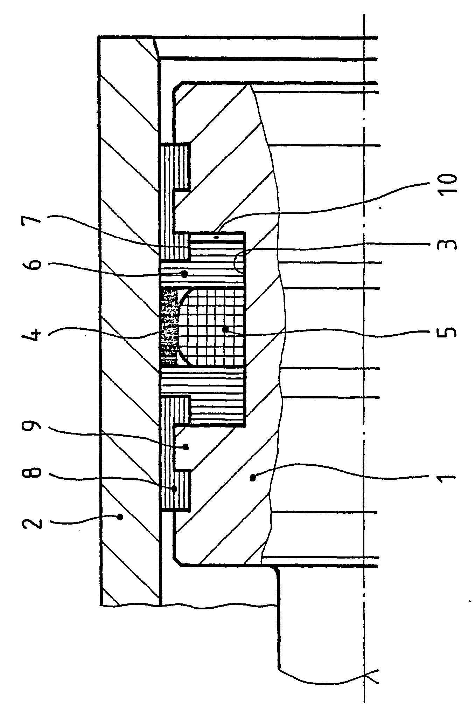

In der von der Mittenebene abgewandten Stirnfläche jedes Stützrings 6 sind vier auf dem Umfang verteilte Radialnuten ausgeführt. Eine dieser Radialnuten des in der Zeichnung rechten Stützrings 6 liegt in der Schnittebene. Diese Radialnuten erleichtern dem Druckmittel die Verteilung um den Stützring herum.

Im Betrieb kann der Druck des Druckmittels von der Kolbenstirnseite her über den nicht dichtenden Führungsring 8, insbesondere auch dessen Schlitz, und den Stützring 6 bis an die zur Mittenebene hin gelegene ebene Stirnfläche des letzteren herangelangen, so daß sowohl Führungsring als auch Stützring im Druckmedium "schwimmen". Wegen dieser allseitigen Druckbeaufschlagung der Führungs- und Stützringe erfahren diese keine Aufweitung. Dennoch stützen die Stützringe die Dichtungsring-Spreizring-Gruppe zuverlässig gegenüber in Axialrichtung wirkenden Kräften.

**Patentansprüche**

1. Dichtungsvorrichtung für einen druckmittelbeaufschlagten Kolben (1) in einem Arbeitszylinder (2) mit einem Dichtungsring (4) und einem diesen an die Zylinderwand andrückenden, radial innerhalb des Dichtungsrings gelegenen und vom Druckmittel beaufschlagten Spreizring (5) aus leicht verformbarem Werkstoff, die in einer umlaufenden Nut (3) des Kolbens eingesetzt sind, und mit beidseits des Dichtungsrings (4) angeordneten im Querschnitt U-förmigen Führungsringen (8), die formschlüssig Bunde (9) in der Außenfläche des Kolbens umgreifen, dadurch gekennzeichnet, daß der Dichtungsring (4) und der Spreizring (5) von gleicher axialer Erstreckung sind und daß zwischen der aus Dichtungs- und Spreizring bestehenden Einheit und den Führungsringen (8) je ein Stützring (6) in der Kolbennut untergebracht ist, welcher sowohl dem Dichtungsring als auch dem Spreizring eine ebene Stirnfläche zuwendet.

2. Dichtungsvorrichtung nach Anspruch 1, gekennzeichnet durch einen Absatz (7) in den von der Mittenebene abgewandten Stirnflächen jedes Stützrings (6), in welchem der zur Mittenebene hin gelegene Schenkel des U-Querschnitts des zugehörigen Führungsrings (8) liegt.

3. Dichtungsvorrichtung nach Anspruch 1 oder 2, gekennzeichnet durch auf dem Umfang verteilte, radial verlaufende Nuten (10) in der von der Mittenebene abgewandten Stirnfläche jedes Stützrings.

4. Dichtungsvorrichtung nach einem oder mehreren der vorhergehenden Ansprüche, gekennzeichnet durch eine ballige äußere Mantelfläche des Spreizrings (5).

## Revendications

1. Dispositif d'étanchéité pour un piston (1) sollicité par un agent sous pression dans un cylindre de travail (2), comportant un anneau d'étanchétité (4) et un anneau d'écartement (5) qui, placé radialement à l'intérieur de l'anneau d'étanchéité qu'il presse contre la paroi du cylindre, est sollicité par l'agent sous pression, et est constitué d'un matériau facilement déformable, lesdits anneaux étant insérés dans une gorge circulaire (3) du piston, et comprenant des bagues de guidage (8) dont la coupe transversale est en forme de U, placées dans deux côtés de l'anneau d'étanchéité (4), qui enveloppent, avec un engagement positif, des colorettes (9) situées dans la surface extérieure du piston, caractérisé en ce que l'anneau d'étanchéité (4) et l'anneau d'écartement (5) présentent une longueur suivant l'axe identique et en ce qu'une bague d'appui (6) est à chaque fois insérée dans la gorge du piston entre l'unité constituée d'un anneau d'étanchéité et d'un anneau d'écartement et les bagues de guidage, (8) ladite bague d'appui présentant une surface extérieure plane tant vers l'anneau d'étanchéité que vers l'anneau d'écartement.

2. Dispositif d'étanchéité selon la revendication 1, caractérisé par un décrochement (7) ménagé dans les surfaces extérieures opposées au plan médian de chacune des bagues d'appui (6), décrochement dans lequel se trouve le côté orienté vers le plan médian de la coupe transversale en U de la bague de guidage (8) associée.

3. Dispositif d'étanchéité selon la revendication 1 ou 2, caractérisé en ce que des gorges se développant radialement (10) sont réparties sur le pourtour de la surface extérieure opposé au plan médian de chacune des bagues d'appui.

4. Dispositif d'étanchéité selon l'une ou plusieurs des revendications précédentes, caractérisé en ce que la surface latérale extérieure de l'anneau d'écartement (5) est convexe.

## Claims

1. Sealing arrangement for a piston (1), acted upon by a pressure medium in a working cylinder (2), with a sealing ring (4) and an expanding ring (5) made from an easily deformable material, which is located radially inside the sealing ring and presses the latter against the cylinder wall, and is acted upon by the pressure medium, the rings being inserted in a circular groove (3) of the piston, and with guide rings (8) with a U-shaped cross section, arranged on both sides of the sealing ring (4), which grip around form-locking flanges (9) in the outer surface of the piston, characterised in that the sealing ring (4) and the expanding ring (5) are of equal axial length and in that between the unit comprising the sealing ring and expanding ring and the guide rings (8), a respective support ring (6) is located in the piston groove, which support ring provides an even front surface facing both the sealing ring and also the expanding ring.

2. Sealing arrangement according to claim 1, characterised by a recess (7) in the front surface, facing away from the central plane, of each support ring (6), in which is located the leg, positioned in the direction of the central plane, of the U-shaped cross section of the associated guide ring (8).

3. Sealing arrangement according to claim 1 or 2, characterised by radial grooves (10) spaced along the periphery in the front surface, facing away from the central plane, of each support ring.

4. Sealing arrangement according to one or several of the preceding claims, characterised by a spherical outer lateral surface of the expanding ring (5).